**Europäisches Patentamt**

(19) **European Patent Office**

**Office européen des brevets**

(11) Veröffentlichungsnummer: **0 174 554**
**B1**

(12) # EUROPÄISCHE PATENTSCHRIFT

(45) Veröffentlichungstag der Patentschrift:
**28.10.87**

(51) Int. Cl.⁴: **F 28 F 23/00**

(21) Anmeldenummer: **85110804.3**

(22) Anmeldetag: **28.08.85**

(54) Wärmeaustauscher zum Übertragen von Wärme aus Abwasser.

(30) Priorität: **13.09.84 DE 3433638**

(43) Veröffentlichungstag der Anmeldung:
**19.03.86 Patentblatt 86/12**

(45) Bekanntmachung des Hinweises auf die Patenterteilung:
**28.10.87 Patentblatt 87/44**

(84) Benannte Vertragsstaaten:
**CH DE GB LI NL SE**

(56) Entgegenhaltungen:
**EP - A - 0 024 543**
**AT - B - 360 205**
**DE - C - 2 345 721**
**DE - C - 2 948 387**

(73) Patentinhaber: **Klüe, Ulrich, Dipl.-Ing., Richtweg 93A,**
**D-2054 Geesthacht (DE)**

(72) Erfinder: **Klüe, Ulrich, Dipl.-Ing., Richtweg 93A,**
**D-2054 Geesthacht (DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Neuer Wall 41, D-2000 Hamburg 36 (DE)**

ACTORUM AG

Beschreibung

Die Erfindung betrifft einen Wärmeaustauscher nach dem Oberbegriff des Anspruchs 1.

Wärmeaustauscher zur Rückgewinnung von Wärme aus verschmutztem Wasser, beispielsweise Haushalts-Abwasser, sind bisher kaum in Gebrauch, weil sich auf den von dem Wasser beaufschlagten Flächen des Austauschers schon nach kurzer Betriebszeit Ablagerungen bilden, die den gewünschten Wärmeaustausch stark behindern. In vielen Produktionsbereichen und in Haushalten fallen grosse Mengen verschmutzten Abwassers mit hohem Temperaturniveau an. Dabei handelt es sich zum Beispiel um Abwässer aus Brauereien, Färbereien, kommunalen Schwimmbädern, Krankenhäusern und Haushalten. Diese Wärmequellen sind bisher kaum genutzt worden, obwohl sie wegen des hohen Temperaturniveaus besonders wertvoll sind und insbesondere bei Wärmepumpen eine hohe Leistungsziffer ermöglichen.

Es sind Wärmeaustauscher bekannt, bei denen zum Sauberhalten der Austauscherflächen mechanische Reinigungseinrichtungen wie Wischerstränge (DE-PS 23 45 721) oder Rohrbürsten (DE-PS 29 48 387) verwendet werden. Diese Einrichtungen sind jedoch für stark verschmutztes Wasser mit schleimigen oder haarigen Verunreinigungen nicht geeignet, da sie zu häufig eingesetzt werden müssten und dann rasch verschleissen würden; auch ist in solchen Fällen ihre Wirksamkeit nur gering.

Bei einem Wärmeaustauscher der eingangs angegebenen Art können die Verunreinigungen durch das Filter so weitgehend entfernt werden, dass der Wärmeaustauscher eine Zeit lang störungsfrei betrieben werden kann; das Filter muss periodisch erneuert oder gereinigt werden. Bei einem bekannten Wärmeaustauscher dieser Art (Aufsatz von Norbert Felber in der Zeitschrift CCI (CLIMA-COMMERZ-INTERNATIONAL) 11/1983, S. 35 ff, Promotor Verlag, Postfach 211053, D 7000 Karlsruhe 21), wird das Filter periodisch durch Rückspülen gereinigt. Wegen der notwendigerweise begrenzten Abmessungen des Filters und wegen der in Abwasser vorkommenden hohen Schmutzgehalte hat das Filter nur eine verhältnismässig kurze Standzeit, insbesondere bei Vorliegen stark verschmutzten Abwassers; es muss dementsprechend oft rückgespült werden. Das erhöht die Betriebskosten und den Ersatzaufwand. Das Filter setzt sich trotz des Rückspülens verhältnismässig rasch zu und muss bald ausgetauscht werden.

Die vorliegende Erfindung geht von der Aufgabe aus, einen Wärmeaustauscher für verschmutztes Wasser zu schaffen, der auch bei schwer verarbeitbaren Verschmutzungen wie sie insbesondere in häuslichem und sanitärem Abwasser, in Duschraum- und Schwimmbad-Abwässern und in faser- und haarhaltigem Abwasser vorliegen, betrieben werden kann und dabei nur einen geringen Aufwand für die Sauberhaltung der Austauscherflächen erfordert.

Nach der Erfindung wird diese Aufgabe gelöst mit dem Wärmeaustauscher nach dem Anspruch 1.

Bei dem erfindungsgemässen Wärmeaustauscher wird durch die Verwendung aufrechtstehender Austauscherplatten und deren Bespülen mit Spülgas ein Festsetzen der besonders schwierigen haarigen und faserigen Verunreinigungen sowie auch schleimiger und kleinstückiger Verunreinigungen im wesentlichen verhindert. Der grösste Teil der Verunreinigungen braucht somit nicht in dem Filter abgefangen zu werden, sondern wird einfach durch den Wärmeaustauscher hindurchgeleitet oder kann als Sinkstoff abgeführt werden. Das Filter kann deshalb entsprechend grobporiger ausgelegt werden, hat deshalb eine längere Standzeit und einen höheren spezifischen Durchfluss und braucht weniger häufig rückgespült oder ausgetauscht zu werden. Demgegenüber fällt der Aufwand für das Einblasen des Spülgases nicht ins Gewicht. Überdies kann der erfindungsgemässe Wärmeaustauscher auch bei Abwasser verwendet werden, bei dem die bisher bekannten Wärmeaustauscher mit vorgeschaltetem Filter überhaupt nicht benutzt werden konnten.

Der erfindungsgemässe Wärmeaustauscher eignet sich für beliebige flüssige oder gasförmige Wärmeträger, insbesondere auch sehr gut zur Wärmerückgewinnung in Wärmepumpen, bei denen dann die Austauscherplatten als Verdampfer der Wärmepumpe verwendet werden. Der erfindungsgemässe Wärmeaustauscher eignet sich auch zur Enthitzung von Kältemittelgasen oder zur Kondensation. Die durch das Bespülen mit dem Spülgas entstehende Rührung des Wassers verbessert den Wärmeaustausch durch Konvektion, so dass die Wärmedurchgangszahl und die spezifische Austauschleistung erhöht und der Investitions- und Platzbedarf entsprechend erniedrigt sind.

Aufrechtstehende, allerdings in Luft angeordnete Austauscherplatten sind an sich bekannt (EP-A 24 543).

Ferner ist es bekannt, Filtertaschen zum Reinigen von Gasen durch Anblasen aus einer Spülgasdüse zum Flattern zu bringen und dadurch Staub abzuschütteln (CH-A 366 727).

Schliesslich ist es bekannt, Lamellen oder Rippen von in einem Gasstrom angeordneten Wärmetauschern durch Besprühen mit Reinigungsflüssigkeit und Spülflüssigkeit zu reinigen (EP-A 94 910).

Die Einblaseinrichtung besteht vorzugsweise aus Gasverteilern, die mit Gasaustrittsöffnungen versehen sind. Das ist sehr einfach und kostengünstig.

Meist wird es vorteilhaft sein, wenn mehrere Austauscherplatten im wesentlichen parallel zueinander mit gegenseitigen Abständen in dem Behälter angeordnet sind. Dadurch wird der bauliche Aufwand pro Einheit der Austauschfläche verringert.

Aus Sicherheitsgründen kann es zweckmässig sein, zusätzlich eine wahlweise betätigbare mechanische Reinigungseinrichtung für die Austauscherplatten vorzusehen. Dadurch können erforderlichenfalls die Austauscherplatten auch mechanisch gereinigt werden, falls besondere Umstände, beispielsweise chemisch ausgelöste Niederschläge, doch Ablagerungen hervorrufen sollten.

Vorzugsweise hat der Behälter eine Abdeckung und eine Gasableitung. Dadurch können in einfacher Weise Belästigungen oder Gefahren durch das aus dem Wasser austretende Spülgas verhindert werden. Im allgemeinen wird der Behälter unter Atmosphärendruck betrieben. Es ist aber natürlich auch eine Auslegung für einen Betrieb bei anderen Drücken möglich. Oft ist es vorteilhaft, wenn wenigstens ein weiterer Behälter vorgesehen ist, der ebenfalls Austauschelemente in Form von aufrechtstehenden Austauscherplatten aufweist und mit dem ersten Behälter hinsichtlich des Wassers in Reihe verbunden ist. Man kann dann das Wasser abschnittsweise mit Wärmeträgern verschiedener Temperatur in Wärmeaustausch bringen und dadurch dem Wasser mehr Wärme entnehmen oder zuführen. Dies ist insbesondere dann der Fall, wenn die Austauscherplatten aufeinanderfolgender Behälter hinsichtlich des Wärmeträgers in Reihe verbunden sind und eine Gegenstrom-Führung von Wasser und Wärmeträger vorliegt. Die Aufteilung in mehrere Behälter oder Behälterabteile ermöglicht echte Gegenstrombedingungen. Es ist auf diese Weise ohne weiteres möglich, mit Abwasser von 80°C Temperatur Frischwasser von 10 auf 65°C zu erwärmen.

Der beschriebene unterteilte Aufbau ist baulich sehr einfach dadurch möglich, dass man die Behälter aneinanderbaut und durch Öffnungen in den Trennwänden miteinander zu einem durch die Behälter verlaufenden Wasser-Strömungsweg verbindet.

Der Aufwand für das Rückspülen des Filters ist besonders klein, wenn das Filter oberhalb des Bodens des Behälters angeordnet ist und stromauf an einen Filterbehälter anschliesst, der einen unterhalb des Filters liegenden Schmutzwasser-Auslass mit einem wahlweise zu öffnenden Schmutzwasser-Auslassventil aufweist. Das Rückspülen kann dann unter dem statischen Druck des in dem Behälter befindlichen Wassers erfolgen. Natürlich können auch andere oder weitere Rückspüleinrichtungen verwendet werden, zum Beispiel Düsen, aus denen beim Rückspülen Luft- oder Wasserstrahlen unter hohem Druck auf das Filter gerichtet werden.

Der bauliche Aufwand für das Filter ist besonders gering, wenn das Filter in einer Seitenwand des Behälters angeordnet ist, die eine Trennwand zwischen dem Behälter und dem Filterbehälter bildet.

Zweckmässigerweise enthält der Filterbehälter einen Niveaufühler, und das Rückspülen erfolgt selbsttätig bei Erreichen eines vorgegebenen Niveaus durch Öffnen des Schmutzwasser-Auslassventils. Es ergibt sich dann eine automatische Arbeitsweise mit entsprechend verringertem Aufwand an menschlicher Tätigkeit.

Die Einblaseinrichtung ist vorzugsweise mit Luft aus dem Luftraum des Behälters speisbar. Dadurch ergibt sich eine Luft-Umwälzung, es wird unerwünschter Wärmeaustausch mit der Umgebung eingeschränkt; und es sind weniger Einrichtungen zur Reinigung oder Desodorierung von nach aussen abgegebener Luft erforderlich.

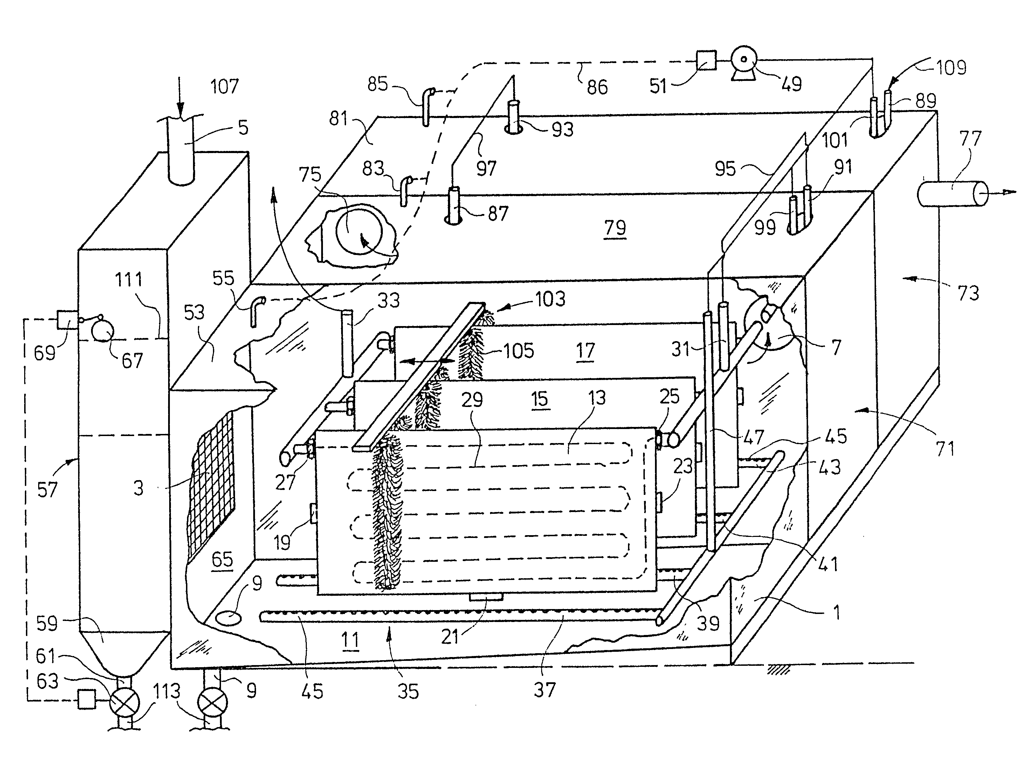

Die Erfindung wird im folgenden anhand eines Ausführungsbeispiels in Verbindung mit der Zeichnung näher beschrieben.

Die Zeichnung zeigt eine ganz schematische, teilweise mit weggebrochenen Wänden dargestellte perspektivische Ansicht eines erfindungsgemässen Wärmeaustauschers.

Die Figur zeigt einen Wärmeaustauscher zum Übertragen von Wärme aus verschmutztem Abwasser zu Frischwasser. Ein Behälter 1 hat einen über ein Filter 3 führenden Abwasser-Eingang 5, einen Abwasser-Ausgang 7 und einen wahlweise zu öffnenden Schlamm-Auslass 9 an der tiefsten Stelle des geneigt ausgeführten Behälterbodens 11. In dem Behälter 1 sind drei Austauschelemente in Form aufrechtstehender Austauscherplatten 13, 15, 17 parallel zueinander und mit gegenseitigen Abständen angeordnet. Die dargestellten Austauscherplatten haben Ansätze, zum Beispiel die Platte 13, die Ansätze 19, 21 und 23, mit denen die Platten in nicht dargestellten Halterungen verankert werden können. Die Austauscherplatten sind von einem Wärmeträger, hier Nutzwasser, zum Beispiel Frischwasser, dem Wärme zugeführt werden soll, durchströmbar.

Die Austauscherplatte 13 hat einen Wärmeträger-Einlass 25 und einen Wärmeträger-Auslass 27 an den Enden eines gestrichelt angedeuteten Leitungsweges 29 im Inneren der Platte 13. Einlass- und Auslass sind vorzugsweise wie dargestellt als Schraubanschlüsse ausgeführt, damit die Platten leicht austauschbar sind. Die Platten 15 und 17 sind ebenso ausgebildet wie die Platte 13. Die Wärmeträger-Ein- und Auslässe sind an Einlass- und Auslass-Sammelrohre 31 bzw. 33 angeschlossen. Im unteren Bereich des Behälters 1 ist eine Einblaseinrichtung 35 zum Einblasen eines Spülgases, hier Luft, vorgesehen, und zwar bei der dargestellten Ausführungsform in Form von rohrförmigen Gasverteilern 37, 39, 41, 43, die zahlreiche Gasaustrittsöffnungen 45 haben und mit ihren einen Enden an eine Spülgas-Eintrittsleitung 47 angeschlossen sind; letztere führt nach oben aus dem Behälter hinaus zu einer Spülgasquelle, hier in Form eines Luftverdichters 49 mit vorgeschaltetem Ansaugfilter 51. Die anderen Enden der Gasverteiler 37, 39, 41, 43 sind verschlossen.

Die Gasverteiler sind so angeordnet, dass die bei Betrieb des Luftverdichters 49 aus den Gasaustrittsöffnungen austretende Spülluft die Oberflächen der Austauscherplatten 13, 15, 17 vollständig bestreicht und der gesamte Wasserinhalt des Behälters 1 gerührt wird. Der Behälter 1 hat eine Abdeckung 53 mit einer Gas-Ableitung 55, über die das aus dem Wasser wieder austretende, möglicherweise mit unangenehm riechenden, gesundheitsschädlichen oder korrosiven Bestandteilen behaftete Spülgas abgeleitet wird.

Das Filter 3 ist zum Zurückhalten nur gröberer Teilchen ausgelegt, die nicht durch das Spülgas in der Schwebe gehalten werden können. Es hat sich gezeigt, dass durch das Bestreichen der Wärmeaustauschflächen mit Spülgas der Wärmedurchgang nicht störend verschlechtert wird; im Gegenteil überwiegt der günstige Einfluss der durch die Einblasung erzeugten Rührung.

Das Filter 3 liegt oberhalb des Behälterbodens 11 und schliesst stromauf an einen Filterbehälter 57 an. Dieser hat unterhalb des Filters 3 einen Schmutzraum 59 und an dessen tiefster Stelle einen Schmutzwasser-Auslass 61 mit einem Schmutzwasser-Auslassventil 63. Das Filter 3 ist in einer Seitenwand 65 des Behälters 1 angeordnet; diese bildet eine Trennwand zwischen dem Behälter 1 und dem Filterbehälter 57. Der Filterbehälter 57 hat einen Niveaufühler 67, der über eine Steuereinrichtung 69 das Ventil 63 öffnet, wenn ein bestimmtes Niveau im Filterbehälter erreicht ist. Gleichzeitig können weitere Rückspüleinrichtungen so z.B. Spritzdüsen (nicht dargestellt) eingeschaltet werden. An den Behälter 1 schliessen sich zwei weitere Behälter 71 und 73 an, die ebenfalls Austauscherplatten und Einblaseinrichtungen (in der Figur nicht zu sehen) wie der Behälter 1 enthalten. Die Behälter 1, 71, 73 sind aneinandergebaut und durch Öffnungen, zum Beispiel den Wasser-Ausgang 7 des Behälters 1, der gleichzeitig den Wasser-Eingang des nächsten Behälters 71 bildet, untereinander zu einem Strömungsweg für das Wasser verbunden. Entsprechend bildet ein Wasser-Ausgang 75 des zweiten Behälters 71 gleichzeitig den Wasser-Eingang des dritten Behälters 73, dessen Wasser-Ausgang 77 den Gesamt-Wasser-Ausgang des dargestellten Wärmeaustauschers bildet. Somit sind die Behälter 1, 71, 73 hinsichtlich des Wassers in Reihe miteinander verbunden.

Auch die Behälter 71 und 73 haben Abdeckungen 79 bzw. 81 mit Gas-Ableitungen 83 bzw. 85. Die gestrichelt gezeichnete Leitung 86 deutet die Möglichkeit an, den Luftverdichter 49 aus den Gas-Ableitungen 55, 83, 85, d.h. aus den Lufträumen der Behälter 1, 71, 73 zu speisen. Von den Austauscherplatten der Behälter 71 und 73 sieht man in der Figur nur die Einlass-Sammelrohre 87 bzw. 89 und die Auslass-Sammelrohre 91 bzw. 93 für den Wärmeträger, d.h. hier das Nutzwasser. Die Wärmeträger-Sammelrohre 31 und 91 sind durch eine Leitung 95, und die Sammelrohre 87 und 93 sind durch eine Leitung 97 miteinander so verbunden, dass das Wasser und der Wärmeträger im Gegenstrom geführt sind. Die Sammelrohre 33 und 89 bilden den Auslass bzw. den Einlass für den Wärmeträger.

Von den Einblaseinrichtungen der Platten 71 und 73 sieht man in der Figur nur die Spülgas-Eintrittsleitungen 99 bzw. 101, die ebenfalls zu dem schon erwähnten Luftverdichter 49 als Spülgasquelle führen.

Auf den Austauscherplatten des Behälters 1 ist eine die Platten entlang verschiebbare mechanische Reinigungseinrichtung 103 für die Austauscherplatten vorgesehen. Das Verschieben kann mittels eines nicht dargestellten Motors erfolgen. Die Reinigungseinrichtung 103 hat Bürsten 105, Schaber oder andere Einrichtungen zum mechanischen Säubern der Plattenoberflächen. Diese Einrichtungen können selbst wieder motorisch antreibbar sein. Entsprechende Reinigungseinrichtungen befinden sich auch in den Behältern 71 und 73. Der dargestellte Wärmeaustauscher arbeitet wie folgt:

Warmes Abwasser strömt in Richtung des Pfeils 107 durch den Abwasser-Eingang 5, das Filter 3 und die Behälter 1, 71, 73 zum Abwasser-Gesamt-Ausgang 77. Als Wärmeträger strömt kaltes Nutzwasser, zum Beispiel Frischwasser, im Gegenstrom in Richtung des Pfeils 109 in und durch die Austauscherplatten und wird dabei erwärmt. Das erwärmte Nutzwasser tritt aus dem Wärmeträger-Auslass-Sammelrohr 31 des ersten Behälters 1 aus. Druckluft wird von dem Luftverdichter 49 geliefert und aus den Gasaustrittsöffnungen 45 ausgepresst. Die Luft bestreicht die Austauscherplatten und rührt das gesamte Wasser in den Behältern um, so dass die von dem Filter 3 durchgelassenen Verunreinigungen in der Schwebe gehalten bleiben und mit dem Abwasserstrom aus dem Wasser-Ausgang 77 des Wärmeaustauschers austreten. Falls das Wasserniveau in dem Filterbehälter 57 über ein vorgegebenes Niveau 111 hinaus ansteigt und dadurch ein zu hoher Filterwiderstand angezeigt wird (hier auch erkennbar am Absinken der Temperatur des Nutzwassers), öffnet der Niveaufühler 67 für eine vorgegebene Spülperiode von zum Beispiel 10 Sekunden das Schmutzwasser-Auslassventil 61. Dadurch strömt der in dem Filterbehälter angesammelte Schmutz in eine Schmutzleitung 113 ab, und das Filter 3 wird durch das rückströmende Wasser gereinigt. Der abgespülte Filterbelag wird gleichfalls in die Schmutzleitung 113 gespült. Nach Ablauf der Spülperiode schliesst sich das Ventil 61 wieder, und das Filter 3 und der Wärmeaustauscher arbeiten wieder normal. Die Schlamm-Auslässe 9 werden je nach Bedarf kurzzeitig geöffnet. Falls erforderlich, werden die mechanischen Reinigungseinrichtungen 103 hin und wieder in Betrieb genommen.

**Patentansprüche**

1. Wärmeaustauscher zum Übertragen von Wärme aus und zu verschmutztem Wasser, insbesondere Abwasser, mit einem zur Aufnahme des Wassers dienenden Behälter (1), der einen über ein Filter (3) führenden Eingang (5), einen Ausgang (7) und vorzugsweise einen wahlweise zu öffnenden Schlamm-Auslass (9) aufweist, und einer Anzahl von in dem Behälter (1) angeordneten Austauschelementen, die von einem Wärmeträger, insbesondere Nutzwasser oder einem Wärmeträgermedium einer Wärmepumpe oder Kälteanlage bei Funktion der Austauschelemente als Verdampfer, Enthitzer oder Kondensatorteil durchströmbar sind, dadurch gekennzeichnet, dass die Austauschelemente aufrechtstehende Austauscherplatten (13, 15, 17) sind, und dass im unteren Bereich des Behälters eine zum Beaufschlagen und Bestreichen der Plattenoberflächen mit einem Spülgas, vorzugsweise Luft, und Rühren des Wassers ausgebildete Einblaseinrichtung vorgesehen ist.

2. Wärmeaustauscher nach Anspruch 1, dadurch gekennzeichnet, dass die Einblaseinrichtung (35) zum Rühren des gesamten Behälterinhalts und das Filter (3) zum Zurückhalten nur gröberer Teilchen ausgelegt ist, die im allgemeinen nicht durch das Einblasen in der Schwebe gehalten werden können.

3. Wärmeaustauscher nach Anspruch 1 oder 2, dadurch gekennzeichnet, dass die Einblaseinrichtung (35) Gasverteiler (37, 39, 41, 43) aufweist, die mit Gasaustrittsöffnungen (45) versehen sind.

4. Wärmeaustauscher nach einem der vorhergehenden Ansprüche, dadurch gekennzeichnet, dass mehrere Austauscherplatten (13, 15, 17) im wesentlichen parallel zueinander mit gegenseitigen Abständen in dem Behälter (1) angeordnet sind.

5. Wärmeaustauscher nach einem der vorhergehenden Ansprüche, dadurch gekennzeichnet, dass zusätzlich eine wahlweise betätigbare mechanische Reinigungseinrichtung (103) für die Austauscherplatten (13, 15, 17) vorgesehen ist.

6. Wärmeaustauscher nach einem der vorhergehenden Ansprüche, dadurch gekennzeichnet, dass der Behälter (1) eine Abdeckung (53) und eine Gasableitung (55) aufweist.

7. Wärmeaustauscher nach einem der vorhergehenden Ansprüche, dadurch gekennzeichnet, dass wenigstens ein weiterer Behälter (71, 73) vorgesehen ist, der ebenfalls Austauschelemente in Form von aufrechtstehenden Austauscherplatten und eine Einblaseinrichtung aufweist und mit dem ersten Behälter (1) hinsichtlich des Wassers in Reihe verbunden ist.

8. Wärmeaustauscher nach Anspruch 7, dadurch gekennzeichnet, dass die Austauscherplatten aufeinanderfolgender Behälter hinsichtlich des Wärmeträgers in Reihe verbunden sind, und dass das Wasser und der Wärmeträger im Gegenstrom geführt sind.

9. Wärmeaustauscher nach Anspruch 7 oder 8, dadurch gekennzeichnet, dass die Behälter (1, 71, 73) aneinandergebaut und durch Öffnungen in den Trennwänden miteinander zu einem durch die Behälter verlaufenden Wasser-Strömungsweg verbunden sind.

10. Wärmeaustauscher nach einem der vorhergehenden Ansprüche, dadurch gekennzeichnet, dass das Filter (3) oberhalb des Bodens (11) des Behälters (1) angeordnet ist und stromauf an einen Filterbehälter (57) anschliesst, der einen unterhalb des Filters (3) liegenden Schmutzwasser-Auslass (61) mit einem wahlweise zu öffnenden Schmutzwasser-Auslassventil (63) aufweist.

11. Wärmeaustauscher nach Anspruch 10, dadurch gekennzeichnet, dass das Filter (3) in einer Seitenwand (65) des Behälters (1), die eine Trennwand zwischen dem Behälter und dem Filterbehälter (57) bildet, angeordnet ist.

12. Wärmeaustauscher nach Anspruch 10 oder 11, dadurch gekennzeichnet, dass der Filterbehälter (57) einen Niveaufühler (67) aufweist und das Rückspülen selbsttätig bei Erreichen eines vorgegebenen Niveaus durch Öffnen des Schmutzwasser-Auslassventils (63) erfolgt.

13. Wärmeaustauscher nach einem der vorhergehenden Ansprüche, dadurch gekennzeichnet, dass die Einblaseinrichtung mit Luft aus dem Luftraum des Behälters speisbar ist.

## Claims

1. Heat exchanger for the transfer of heat from and to dirty water, in particular waste water, comprising a water-receiving container (1) including an inlet (5) extending over a filter (3), an outlet (7) and preferably a selectively openable mud outlet (9), and a plurality of exchanger elements arranged in the container (1) and suffusable with a thermal carrier, in particular industrial water or a thermal medium of a heat pump or refrigeration system upon functioning of the exchanger elements as evaporator, deheater or condenser means, characterized in that the exchanger elements are upright exchanger plates (13, 15, 17), and that in the lower part of the container is provided an injection means arranged for subjecting the plate surfaces to and sweeping them with a flush gas, preferably air, and for stirring the water.

2. Heat exchanger according to claim 1, characterized in that the injection means (35) is designed for stirring the entire container content, and that the filter (3) is designed for retaining only coarser particles which generally cannot be maintained suspended via injection.

3. Heat exchanger according to claim 1 or 2, characterized in that the injection means (35) includes gas distributors (37, 39, 41, 43) provided with gas outlet ports (45).

4. Heat exchanger according to any of the preceding claims, characterized in that a plurality of exchanger plates (13, 15, 17) are arranged in the container (1) substantially in parallel and spaced relationship.

5. Heat exchanger according to any of the preceding claims, characterized in that a selectively operable mechanical cleansing means (103) for the exchanger plates (13, 15, 17) is additionally provided.

6. Heat exchanger according to any of the preceding claims, characterized in that the container (1) includes a cover (53) and a gas drain means (55).

7. Heat exchanger according to any of the preceding claims, characterized in that there is provided at least a further container (71, 73) which also includes exchanger elements in the form of upright exchanger plates and an injection means and, with respect to the water, is series-connected to the first container (1).

8. Heat exchanger according to claim 7, characterized in that the exchanger plates of successive containers are series-connected with respect to the thermal carrier, and that the water and the thermal carrier are conducted in countercurrent fashion.

9. Heat exchanger according to claim 7 or 8, characterized in that the containers (1, 71, 73) are contiguous and interconnected through openings in the partitions to form a water flow path extending through the containers.

10. Heat exchanger according to any of the preceding claims, characterized in that the filter (3) is disposed above the bottom (11) of the container (1) and upstream is adjacent to a filter container (57) including a slops outlet (61) having a selectively openable slops outlet valve (63) and arranged below the filter (3).

11. Heat exchanger according to claim 10, characterized in that the filter (3) is arranged in a side wall (65) of the container (1) which forms a partition between the container and the filter container (57).

12. Heat exchanger according to claim 10 or 11, characterized in that the filter container (57) includes a level sensor (67), and that backwashing takes place automatically by opening the slops outlet valve (63) when a predetermined level has been reached.

13. Heat exchanger according to any of the preceding claims, characterized in that the injection means is feedable with air from the air space of the container.

**Revendications**

1. Echangeur de chaleur pour extraire de la chaleur d'eaux polluées, notamment d'eaux résiduaires ou leur en apporter, comprenant un récipient (1) pour recevoir l'eau, ce récipient comportant une entrée (3) pourvue d'un filtre (5), une sortie (7) et éventuellement une ouverture (9) d'évacuation des boues, qu'on peut ouvrir à volonté, et une pluralité d'éléments d'échange disposés dans le récipient (1) et susceptibles d'être parcourus par un milieu caloporteur, en particulier de l'eau industrielle, ou le milieu caloporteur d'une pompe à chaleur ou d'une installation frigorifique si les éléments d'échange fonctionnent comme vaporisateur, réfrigérant ou partie de condenseur, caractérisé en ce que les éléments d'échange sont des plaques d'échange verticales (13, 15, 17), et en ce qu'un dispositif de soufflage est prévu à la partie inférieure du récipient pour projeter un gaz de nettoyage, de préférence de l'air, sur la surface des plaques et l'en recouvrir, et pour agiter l'eau.

2. Echangeur selon la revendication 1, caractérisé en ce que le dispositif de soufflage (35) est calculé pour agiter l'ensemble du contenu du récipient, et le filtre (3) est calculé pour n'arrêter que les particules relativement grossières, qui, en général, ne pourraient pas être maintenues en suspension par le soufflage.

3. Echangeur selon l'une des revendications 1 ou 2, caractérisé en ce que le dispositif de soufflage (35) comporte des répartiteurs de gaz (37, 39, 41, 43) présentant des ouvertures de sortie de gaz (45).

4. Echangeur selon l'une des revendications précédentes, caractérisé en ce que plusieurs plaques d'échange (13, 15, 17) sont disposées dans le récipient en étant sensiblement parallèles et écartées les unes des autres.

5. Echangeur selon l'une des revendications précédentes, caractérisé en ce qu'il est prévu en outre un dispositif mécanique (103) de nettoyage des plaques d'échange (13, 15, 17), actionnable à volonté.

6. Echangeur selon l'une des revendications précédentes, caractérisé en ce que le récipient (1) est pourvu d'un couvercle et d'une conduite d'évacuation de gaz.

7. Echangeur selon l'une des revendications précédentes, caractérisé en ce qu'il est prévu au moins un autre récipient (71, 73) qui comprend également des éléments d'échange constitués par des plaques d'échange verticales et un dispositif de soufflage de gaz et qui est connecté en série, si on considère la circulation de l'eau, avec le premier récipient (1).

8. Echangeur selon la revendication 7, caractérisé en ce que les plaques d'échange des récipients successifs sont connectées en série, si on considère la circulation du milieu caloporteur, et en ce que l'eau et le milieu caloporteur circulent à contre-courant.

9. Echangeur selon l'une des revendications 7 ou 8, caractérisé en ce que les récipients (1, 71, 73) sont construits adjacents les uns aux autres et communiquent entre eux par des ouvertures dans les parois qui les séparent pour établir un passage pour le courant d'eau qui circule à travers les récipients.

10. Echangeur selon l'une des revendications précédentes, caractérisé en ce que le filtre (3) est disposé au-dessus du fond du récipient (1) et est relié, du côté amont, à un récipient à filtre (57) qui comporte une sortie (61) d'évacuation de l'eau polluée située en contrebas du filtre (3) avec une soupape (63) d'évacuation d'eau polluée ouvrable à volonté.

11. Echangeur selon la revendication 10, caractérisé en ce que le filtre (3) est disposé dans une paroi latérale (65) du récipient (1), cette paroi constituant une séparation entre le récipient et le récipient à filtre (57).

12. Echangeur selon l'une des revendications 10 ou 11, caractérisé en ce que le récipient à filtre (57) comporte un détecteur de niveau (67), et un lavage à contre-courant s'effectue automatiquement par ouverture de la soupape à eau polluée (63) lorsqu'un niveau prédéterminé est atteint.

13. Echangeur selon l'une des revendications précédentes, caractérisé en ce que le dispositif de soufflage peut être alimenté par de l'air provenant de l'espace d'air du récipient.

0174 554